# EUROPEAN PATENT APPLICATION

(11) **EP 4 465 102 A1**
(43) Date of publication of application: **20.11.2024**
(21) Application number: 23740272.2
(22) Date of filing: 11.01.2023
(51) Int. Cl.: G02B 6/44, G02B 6/02, G02B 6/36, G02B 6/52

(54) **OPTICAL FIBER CABLE**

(30) Priority: 12.01.2022 JP 2022003066
(71) Applicant: SUMITOMO ELECTRIC INDUSTRIES, LTD., Osaka-shi, Osaka 541-0041 (JP)
(72) Inventor: SATO, Fumiaki, Osaka-shi, Osaka 541-0041 (JP); SHIMODA, Yuuki, Osaka-shi, Osaka 541-0041 (JP)
(74) Representative: Müller-Boré & Partner Patentanwälte PartG mbB
(86) International application number: PCT/JP2023/000456
(87) International publication number: WO 2023/136263

(57) **Abstract**

An optical fiber cable of the present disclosure includes: a cable main body including a plurality of optical fibers, each of the plurality of optical fibers including: a plurality of core portions; a cable sheath inside which the plurality of optical fibers are housed; and at least one tensile strength member embedded in the cable sheath; and a connecting member provided at a first end portion of the cable main body.

## Description

### TECHNICAL FIELD

The present disclosure relates to an optical fiber cable.

This application claims priority to Japanese Patent Application No. 2022-003066 filed on January 12, 2022, the entire contents of which are incorporated herein by reference.

### BACKGROUND ART

Patent Literature 1 discloses an optical fiber cable for pneumatic feeding including a plurality of optical fiber ribbons, a cable sheath, and a tensile strength member embedded in the cable sheath.

### CITATION LIST

### PATENT LITERATURE

Patent Literature 1: JP2020-204752A

### SUMMARY OF INVENTION

### SOLUTION TO PROBLEM

An optical fiber cable according to an aspect of the present disclosure includes:
a cable main body including a plurality of optical fibers, each of the plurality of optical fibers including: a plurality of core portions; a cable sheath inside which the plurality of optical fibers are housed; and at least one tensile strength member embedded in the cable sheath; and
a connecting member provided at a first end portion of the cable main body.

### BRIEF DESCRIPTION OF DRAWINGS

[FIG. 1] FIG. 1 illustrates an optical fiber cable according to the present embodiment.
[FIG. 2] FIG. 2 is a view illustrating an end portion of the optical fiber cable.
[FIG. 3] FIG. 3 is a cross-sectional view of a cable main body.
[FIG. 4] FIG. 4 is a cross-sectional view of an optical fiber.
[FIG. 5] FIG. 5 is a schematic view for illustrating a convertor.

### DESCRIPTION OF EMBODIMENTS

### (Technical Problem)

In order to cope with transition to next-generation mobile communication systems and an increase in communication speed required due to an increase in video information, a need for an optical fiber cable of multi-core fibers with high core density is increasing. In general, terminals of optical fiber cables are connected to each other by fusion-splicing. However, fusion-splicing for multi-core fibers requires rotational alignment of cores, making it difficult to perform fusion-splicing in a lump. For this reason, the time required for the splicing work tends to be long.

### (Effects of Present Disclosure)

According to the present disclosure, it is possible to provide an optical fiber cable using multi-core fibers, with good workability of connection work after installation.

### (Description of Embodiments of Present Disclosure)

First, embodiments of the present disclosure are enumerated and described.
(1) An optical fiber cable according to an aspect of the present disclosure includes:
   a cable main body including a plurality of optical fibers, each of the plurality of optical fibers including: a plurality of core portions; a cable sheath inside which the plurality of optical fibers are housed; and at least one tensile strength member embedded in the cable sheath; and
   a connecting member provided at a first end portion of the cable main body.
   According to the above configuration, the optical fiber cable has a certain rigidity due to the tensile strength member embedded in the cable sheath, so it is difficult for the optical fiber cable to kink even when it is pneumatically fed. In addition, the connecting member for a multi-core fiber is provided at the first end portion of the optical fiber. For this reason, an aligning work for connecting multi-core fibers during fusion-splicing becomes unnecessary at the first end portion where the connecting member is provided, and a work for providing a connector or the like at a terminal of the optical fiber cable after installation becomes unnecessary. As a result, it is possible to provide the optical fiber cable using multi-core fibers, with good workability of connection after installation.
(2) The optical fiber cable according to the above (1), in which at least a part of the cable main body may be curled.
   A curled portion of the cable main body can be expanded and contracted in a direction in which the cable main body extends. Thereby, in a case where the connecting member is provided in advance, even when an installation length and an actual length of the cable main body are different, a length of the cable main body can be adjusted to the installation length by expansion and contraction of the curled portion.
(3) The optical fiber cable according to the above (2), in which a curl outer diameter of the cable main body that is curled may be 50 mm or greater and 300 mm or less.
   According to the above configuration, an increase in transmission loss of the optical fiber cable due to curl processing is suppressed, and a decrease in workability of installing the optical fiber cable by pneumatic feeding is suppressed.
(4) The optical fiber cable according to any one of the above (1) to (3), in which the connecting member may be a multi-core connector.
   According to the above configuration, the multi-core connector is used as the connecting member, so that it can be connected as is to another optical fiber cable, leading to improvement in workability of connection after installation.
(5) The optical fiber cable according to any one of the above (1) to (4), in which the connecting member may be connected to a second end portion of the cable main body.
   According to the above configuration, the connecting member is also provided at the second end portion of the cable main body, so that the optical fiber cable can be connected as is at the first end portion and the second end portion to other optical fiber cables, leading to further improvement in workability of connection after installation.
(6) The optical fiber cable according to the above (5), in which one of the connecting members connected to the first end portion and the second end portion may be a convertor configured to convert and connect the plurality of optical fibers, each of the plurality of optical fibers including the plurality of core portions, to optical fibers, each of the optical fibers including a single-core portion.
   According to the above configuration, the convertor capable of converting and connecting a multi-core fiber (an optical fiber having a plurality of core portions) to single-core fibers (optical fibers each having a single core portion) is provided at a tip end of the optical fiber. For this reason, connection with an optical fiber cable having single-core fibers can be facilitated.
(7) The optical fiber cable according to any one of the above (1) to (6), in which the optical fiber cable may be configured to be pneumatically fed within a duct.
   The optical fiber cable of the above-described configuration is likely to have improved workability regarding connection after installation, even when it is installed by pneumatic feeding.

### (Details of Embodiments of Present Disclosure)

A specific example of an optical fiber cable according to an embodiment of the present disclosure will be described below with reference to the drawings. Note that the present invention is not limited to the example, is defined by the claims, and is intended to include all changes made within the meaning and scope equivalent to the claims.

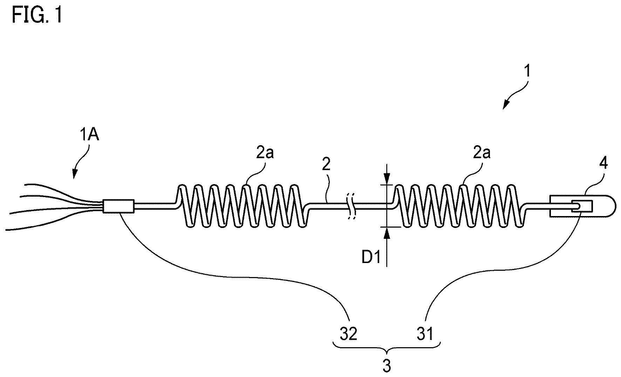

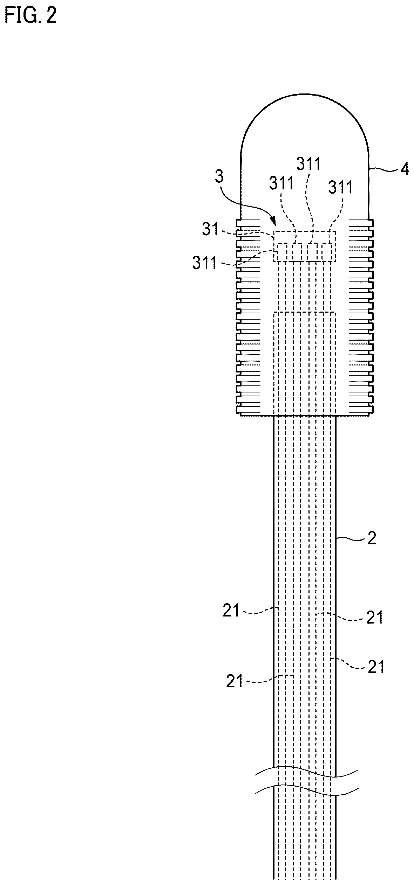

FIG. 1 illustrates an optical fiber cable 1 according to the present embodiment. FIG. 2 is a view illustrating an end portion of the optical fiber cable 1. The optical fiber cable 1 of the present embodiment is an optical fiber cable for pneumatic feeding for which an installation work is performed by pneumatic feeding. As shown in FIG. 1, the optical fiber cable 1 includes a cable main body 2 and a connecting member 3. In addition, as shown in FIG. 2, the cable main body 2 is provided therein with a plurality of optical fibers 21 each having a plurality of core portions 211. In addition, the connecting member 3 is provided at a first end portion of the cable main body 2 and, upon connection with another optical fiber cable (not shown), holds the optical fibers 21 each having a plurality of core portions 211 described below and optical fibers 21 of another optical fiber cable to be connectable.

The optical fiber cable 1 further includes a protective tube 4. The protective tube 4 is provided at the first end portion of the cable main body 2. The protective tube 4 is made of, for example, metal, and is provided to cover the connecting member 3. The protective tube 4 protects the first end portion of the cable main body 2 and the connecting member 3 from damage when installing the optical fiber cable 1 by pneumatic feeding.

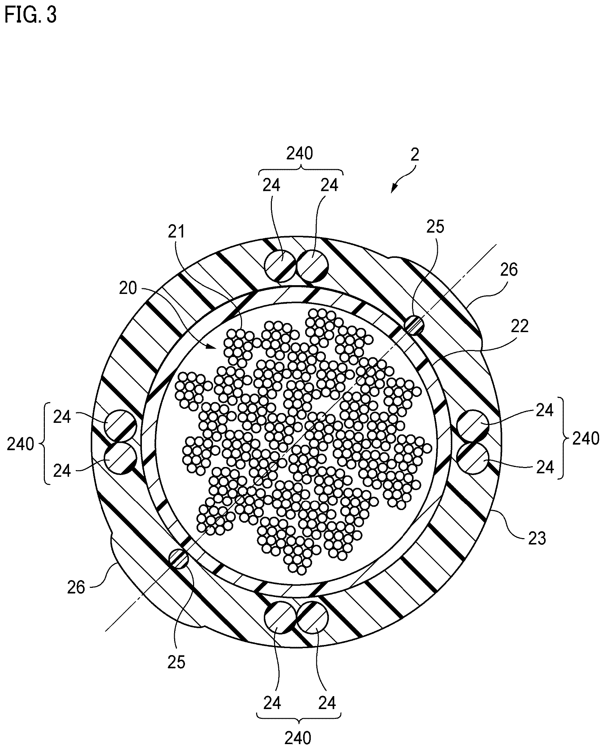

FIG. 3 is a cross-sectional view of the cable main body 2. As shown in FIG. 3, the cable main body 2 includes, for example, a plurality of optical fibers 21 constituting a plurality of optical fiber ribbons 20, a water-absorbing tape 22, a cable sheath 23, at least one tensile strength member 24, at least one tear cord 25 (fibrous filler), and a plurality of projections 26.

The water-absorbing tape 22 is wound, for example, longitudinally or spirally, so as to cover an entire periphery of the plurality of optical fiber ribbons 20. The water-absorbing tape 22 is a tape that has undergone water-absorbing processing by attaching water-absorbing powder to a base fabric made of, for example, polyester. Note that, in the present embodiment, the optical fiber cable 1 includes the water-absorbing tape 22, but the optical fiber cable 1 may not necessarily include the water-absorbing tape 22.

The cable sheath 23 covers a periphery of the water-absorbing tape 22. In other words, the cable sheath 23 houses the plurality of optical fiber ribbons 20 (the plurality of optical fibers 21). In the cable sheath 23, a plurality of tensile strength members 24 are embedded.

The tensile strength member 24 is arranged along a longitudinal direction of the cable main body 2. A diameter of the tensile strength member 24 is, for example, 0.5 mm. The tensile strength member 24 is formed of, for example, fiber-reinforced plastic (FRP) such as aramid FRP, glass FRP, and carbon FRP. However, the tensile strength member 24 may also be formed of liquid crystal polymer. The tensile strength member 24 preferably has a non-inductive property. Note that fiber-reinforced plastic (FRP) is generally a flammable material. From a standpoint of improving flame retardancy of the entire optical fiber cable 1, the tensile strength member 24 is preferably arranged in the cable sheath 23 at a position close to a center of the optical fiber cable 1 rather than near a surface of the cable sheath 23.

In the present embodiment, in a cross-sectional view of the cable main body 2, the tensile strength member 24 has a circular shape. In the present embodiment, eight tensile strength members 24 are provided in the cable sheath 23. Note that in the present embodiment, the tensile strength members 24 are provided in pairs of two per set. The set is referred to as a tensile strength member set 240. In other words, four tensile strength member sets 240 are provided in the cable sheath 23.

In the cable main body 2 according to the present embodiment, the four tensile strength members sets 240 are spaced apart from each other at equal intervals. Specifically, the tensile strength member sets 240 are provided one by one at facing positions across the center of the optical fiber cable 1 in the radial cross section of the optical fiber cable 1. The tensile strength member sets 240 in the radial cross section of the optical fiber cable 1 are arranged so that two straight lines each connecting the facing tensile strength member sets 240 are orthogonal to each other.

The tear cord 25 is provided for tearing the cable sheath 23. The tear cord 25 is provided in the cable sheath 23 along the longitudinal direction of the cable main body 2. In the present embodiment, two tear cords 25 are provided. The two tear cords 25 are arranged to face each other, for example, across the center of the cable main body 2. The tear cord 25 is made of a fibrous material, for example, a plastic material (for example, polyester) that is resistant to tension.

The projections 26 are provided on an outer surface of the cable sheath 23 and are formed to protrude radially from the cable sheath 23. In the present embodiment, the two projections 26 are provided. The two projections 26 are provided along the longitudinal direction of the cable main body 2. The projections 26 are formed integrally with the cable sheath 23 by extrusion molding. Note that, in the present embodiment, the cable main body 2 is provided with the projections 26, but the cable main body 2 may not be provided with the projection 26.

The two projections 26 are not necessarily required to be provided continuously. For example, the two projections 26 may be provided intermittently.

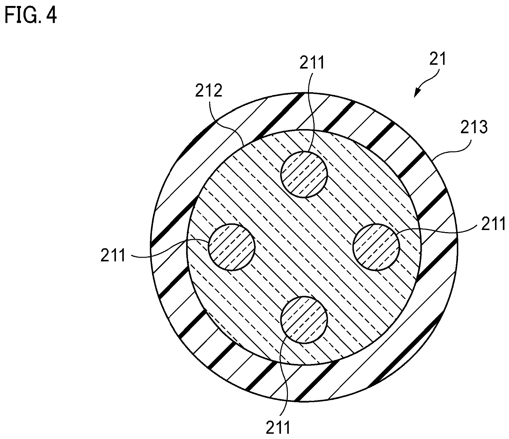

Next, the optical fibers 21 constituting the optical fiber ribbon 20 will be described. FIG. 4 is a cross-sectional view of the optical fiber 21. As shown in FIG. 4, the optical fiber 21 includes a plurality of core portions 211, a clad portion 212 that covers a periphery of the core portions 211, and a covering portion 213 that covers a periphery of the clad portion 212. The optical fiber 21 is a so-called multi-core fiber having the plurality of core portions 211. In the following description, the optical fiber having the plurality of core portions may be referred to as a multi-core fiber or multi-core optical fiber, and an optical fiber having a single core portion may be referred to as a single-core fiber or single-core optical fiber.

The core portion is made of glass with a higher refractive index than that of the clad portion 212. An outer diameter of the core portion 211 is, for example, 5 µm or greater and 10 µm or less. In the present embodiment, four core portions 211 are provided.

The clad portion 212 is provided to cover the four core portions 211, and an outer shape thereof is substantially circular. An outer diameter of the clad portion 212 is, for example, 125 µm.

The covering portion 213 is provided to cover the periphery of the clad portion 212. The covering portion 213 is formed of, for example, an ultraviolet curable resin (UV resin).

In the optical fiber cable 1 according to the present embodiment, the cable main body 2 includes the tensile strength members 24, in addition to the multi-core fibers and the cable sheath 23. As a result, since the optical fiber cable 1 has a certain rigidity, it is difficult for the optical fiber cable to kink even when installed by pneumatic feeding.

In addition, the optical fiber cable 1 includes the connecting member 3 for a multi-core fiber provided at the first end portion of the cable main body 2. An aligning work for connecting the multi-core fibers during fusion-splicing becomes unnecessary at the first end portion where the connecting member 3 is provided, and a work for providing a connector or the like at the terminal of the optical fiber cable 1 after installation becomes unnecessary. As a result, it is possible to provide the optical fiber cable 1 using multi-core fibers, with good workability of connection after installation.

Returning to FIG. 1, at least a part of the cable main body 2 is provided with a curled portion 2a formed by curl processing. The curled portion 2a has a helical shape. When tensile force is applied to the curled portion 2a in the longitudinal direction, a helical pitch of the curled portion 2a widens, and the cable main body 2 and the entire optical fiber cable 1 are expanded. When the tensile force on the expanded curled portion 2a is released, the helical pitch of the curled portion 2a is reduced, the lengths of the cable main body 2 and the entire optical fiber cable 1 are shortened, and the curled portion 2a returns to its original shape.

In the optical fiber cable 1 according to the present embodiment, the curled portion 2a can be expanded and contracted in a direction in which the cable body portion 2 extends. As a result, even when a planned installation length and an actual length of the cable main body 2 are different, the optical fiber cable 1 is adjusted so that the length of the cable main body 2 becomes the planned installation length by the expansion and contraction of the curled portion 2a.

A curl outer diameter D1, which is a helical outer diameter of the curled portion 2a, is preferably 50 mm or greater and 300 mm or less. When the curl outer diameter is too small, transmission loss of the optical fiber cable 1 may increase due to curl processing. In addition, when the curl outer diameter is too large, an outer diameter of the entire optical fiber cable 1 increases, so the workability of installation by pneumatic feeding may decrease.

In the optical fiber cable 1 according to the present embodiment, the curl outer diameter D1 is 50 mm or greater and 300 mm or less, so the increase in transmission loss of the optical fiber cable 1 due to the curl processing is suppressed, and the decrease in workability of installing the optical fiber cable 1 by pneumatic feeding is suppressed.

Next, the connecting member 3 will be further described. As shown in FIGS. 1 and 2, in the optical fiber cable 1 according to the present embodiment, the connecting member 3 covered by the protective tube 4 is a multi-core connector 31. The multi-core connector 31 is, for example, a 192-core connector with an MT connector as a base structure. As shown in FIG. 2, the multi-core connector 31 includes, for example, a plurality of ferrules 311. The ferrule 311 is configured to fix and hold the optical fiber ribbon 20 by inserting a tip end of the optical fiber ribbon 20 therein. The ferrule 311 is, for example, a 12-core MT ferrule.

Note that the numbers of the multi-core connectors 31 and the ferrules 311 provided in the present embodiment are not limited to the example in FIGS. 1 and 2.

As described above, in the optical fiber cable 1 according to the present embodiment, the connecting member 3 is a multi-core connector 31. Since the multi-core connector 31 enables direct connection with another optical fiber cable, the workability of connecting the optical fiber cable 1 after installation is improved.

As shown in FIG. 1, the optical fiber cable 1 according to the present embodiment includes the connecting member 3 not only at the first end portion of the cable main body 2 on the side where the protective tube 4 is provided, but also at a second end portion of the cable main body 2. In this way, the connecting member 3 is also provided at the second end portion of the cable main body 2, so that the optical fiber cable can be connected as is at the first end portion and the second end portion to other optical fiber cables, leading to further improvement in workability of connection after installation.

Note that in the optical fiber cable 1 according to the present embodiment, the connecting member 3 provided at the second end portion of the cable main body 2, which is different from the first end portion where the protective tube 4 is provided, is a convertor 32. The convertor 32 keeps the optical fiber cable 1, which includes multi-core fibers therein, and an optical fiber cable 1A, which includes single-core fibers therein, to be connectable.

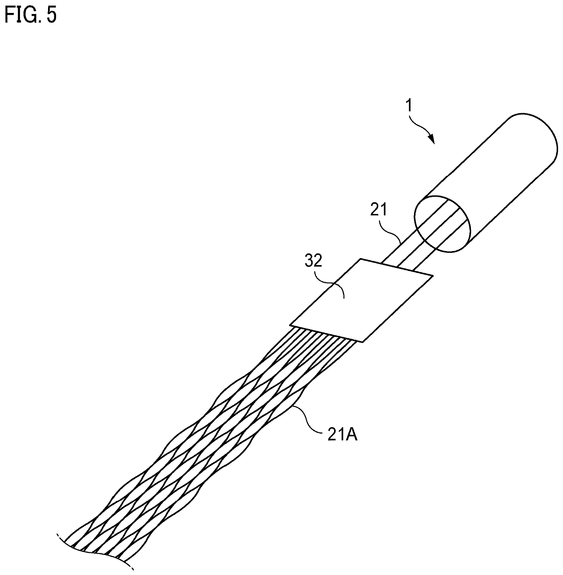

FIG. 5 is a schematic view for illustrating the convertor 32. The convertor 32 holds the multi-core optical fibers 21 by inserting the multi-core optical fibers 21 therein. The convertor 32 is configured to connect a single-core optical fiber 21A having a single core portion to each core portion 211 (see FIG. 4) of the multi-core fiber. The convertor 32 exposes the single-core optical fibers 21A in a direction on an opposite side to a direction in which the convertor 32 receives insertion of the multi-core optical fibers 21.

In the multi-core optical fiber 21 and the single-core optical fiber 21A connected to the convertor 32, the number of core portions is preferably the same. For example, when three multi-core optical fibers 21 each having four core portions 211 are connected to the convertor 32, 12 single-core optical fibers 21A are preferably connected to the convertor 32. In this case, as illustrated in FIG. 5, the 12 single-core optical fibers 21A connected to the convertor 32 may constitute an optical fiber ribbon composed of 12-core optical fiber 21A. Additionally, the 12-core optical fiber ribbon may be an intermittent connection-type optical fiber ribbon in which connected portions and non-connected portions are alternately provided. In the connection portion, adjacent optical fibers 21A are connected to each other. In the non-connected portion, adjacent optical fibers 21A are spaced apart from each other.

In this way, in the optical fiber cable 1 according to the present embodiment, the convertor 32 for converting and connecting the multi-core optical fibers 21 each including a plurality of core portions 211 to the single-core optical fibers 21A each including a single-core portion is provided as the connecting member 3. Thereby, connection with an optical fiber cable having single-core fibers can be easily achieved.

The optical fiber cable 1 according to the present embodiment may be configured so that it can be installed by being pneumatically fed in a duct. For example, since the optical fiber cable 1 according to the present embodiment includes the protective tube 4, the installation by pneumatic feeding is performed while protecting the optical fibers 21, the multi-core connector 31, and the like. In the optical fiber cable 1 that can be installed by such pneumatic feeding, workability regarding connection after installation is likely to be improved.

Although the present disclosure has been described in detail with reference to the specific embodiment, it is obvious to one skilled in the art that a variety of changes and modifications can be made without departing from the spirit and scope of the present disclosure. In addition, the numbers, positions, shapes, and the like of the constitutional members described above are not limited to those in the above embodiment, and can be changed to suitable numbers, positions, shapes, and the like when implementing the present disclosure.

### REFERENCE SIGNS LIST

1: optical fiber cable
2: cable main body
2a: curled portion
3: connecting member
4: protective tube
20: optical fiber ribbon
21, 21A: optical fiber
22: water-absorbing tape
23: cable sheath
24: tensile strength member
25: tear cord
26: projection
31: multi-core connector
32: convertor
211: core portion
212: clad portion
213: covering portion
240: tensile strength member set
311: ferrule
D1: curl outer diameter

## Claims

1. An optical fiber cable comprising:
a cable main body comprising a plurality of optical fibers, each of the plurality of optical fibers comprising: a plurality of core portions; a cable sheath inside which the plurality of optical fibers are housed; and at least one tensile strength member embedded in the cable sheath; and
a connecting member provided at a first end portion of the cable main body.

2. The optical fiber cable according to claim 1, wherein at least a part of the cable main body is curled.

3. The optical fiber cable according to claim 2, wherein a curl outer diameter of the cable main body that is curled is 50 mm or greater and 300 mm or less.

4. The optical fiber cable according to any one of claims 1 to 3, wherein the connecting member is a multi-core connector.

5. The optical fiber cable according to any one of claims 1 to 4, wherein the connecting member is connected to a second end portion of the cable main body.

6. The optical fiber cable according to claim 5, wherein one of the connecting members connected to the first end portion and the second end portion is a convertor configured to convert and connect the plurality of optical fibers, each of the plurality of optical fibers comprising the plurality of core portions, to optical fibers, each of the optical fibers comprising a single-core portion.

7. The optical fiber cable according to any one of claims 1 to 6, wherein the optical fiber cable is configured to be pneumatically fed within a duct.
